# EUROPEAN PATENT SPECIFICATION

(11) **EP 1 392 488 B1**
(45) Date of publication and mention of the grant of the patent: **18.10.2006**
(21) Application number: 02735994.2
(22) Date of filing: 17.05.2002
(51) Int. Cl.: B29C 49/42

(54) **METHOD AND MACHINE FOR BLOWING PLASTIC BOTTLES**
BLASVERFAHREN UND BLASFORMVORRICHTUNG FÜR FLASCHEN
PROCEDE ET MACHINE POUR LE SOUFFLAGE DE BOUTEILLES EN PLASTIQUE

(30) Priority: 17.05.2001 IT BO20010302
(43) Date of publication of application: 03.03.2004
(73) Proprietor: BLO N' FIL S.r.l., 40124 Bologna (IT)
(72) Inventor: VICINI, Vittorio, I-47023 Cesena (IT)
(74) Representative: Jorio, Paolo
(86) International application number: PCT/IT2002/000325
(87) International publication number: WO 2002/092323

(56) References cited:
- EP-A- 0 667 224
- US-A- 4 140 468
- US-A- 4 197 073
- US-A- 4 354 813

## Description

### TECHNICAL FIELD

The present invention relates to a method of blowing plastic bottles from respective preforms.

### BACKGROUND ART

In the plastic bottling industry, a linear blowing machine of the type disclosed, for example, in document EP-667224-A1 comprises a number of blowing units aligned and equally spaced with a given spacing in a first direction.

Each blowing unit comprises a mold, in turn comprising two facing half-molds which are moved, with respect to each other and in a second direction substantially crosswise to said first direction, between an open position permitting insertion of a preform or removal of a blown bottle, and a closed position in which the preform inside the mold is blown. It should be pointed out that, normally, all the molds are moved simultaneously between the open and closed positions.

The blowing machine also comprises a step-operated conveying device having a number of gripping members, each for retaining a relative preform or bottle. The gripping members are equally spaced along the conveying device with the same spacing as the blowing units, and are fed by the conveying device along a path, a portion of which extends between the half-molds and parallel to the first direction.

At the end of each blowing operation, and when the molds are in the open position, the conveying device is operated to unload the blown bottles from the relative molds and, at the same time, load another preform into each mold.

To perform the above unloading and loading operation, the conveying device must be operated, at each operating cycle of the blowing machine, so as to impart to each gripping member a movement which substantially equals said spacing multiplied by the number of blowing units, and which therefore varies alongside a variation in the number of blowing units.

At each operating cycle, the downtime of the blowing machine corresponding to the unloading and loading operation therefore varies alongside a variation in the above movement, and, in particular, increases alongside an increase in the number of blowing units.

As a result, known linear blowing machines of the above type have an output rate whose increase by the addition of a blowing unit decreases alongside an increase in the number of blowing units.

### DISCLOSURE OF THE INVENTION

It is an object of the present invention to provide a method of blowing plastic bottles, designed to eliminate It is an object of the present invention to provide a method of blowing plastic bottles, designed to eliminate the aforementioned drawbacks.

According to the present invention, there is provided a method of blowing plastic bottles as claimed in Claim 1.

The present invention also relates to a machine for blowing plastic bottles from respective preforms.

According to the present invention, there is provided a linear machine for blowing plastic bottles as claimed in Claim 5.

### BRIEF DESCRIPTION OF THE DRAWINGS

A non-limiting embodiment of the present invention will be described by way of example with reference to the accompanying drawings, in which:
Figures 1 and 2 show schematic plan views of a preferred embodiment of the machine according to the present invention in two different operating positions;
Figure 3 shows a schematic side view of the Figure 1 machine;
Figure 4 shows a schematic view in perspective of a detail of the Figure 1 machine;
Figure 5 shows a schematic plan view of a variation of the Figure 1 machine.

### BEST MODE FOR CARRYING OUT THE INVENTION

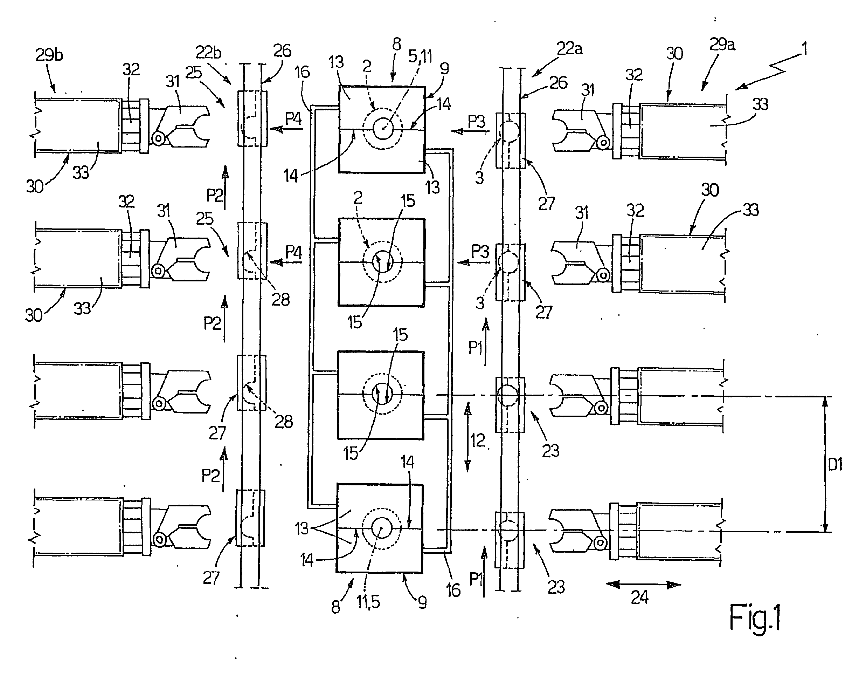

Number 1 in Figures 1, 2 and 3 indicates as a whole a linear machine for blowing known plastic bottles 2 from respective known preforms 3.

Each bottle 2 and the relative preform 3 comprise a body 4a and 4b respectively, which is substantially cup-shaped, has a longitudinal axis 5, and has an externally threaded end 6 defined axially by an annular collar 7 extending radially outwards from the outer surface of body 4a, 4b.

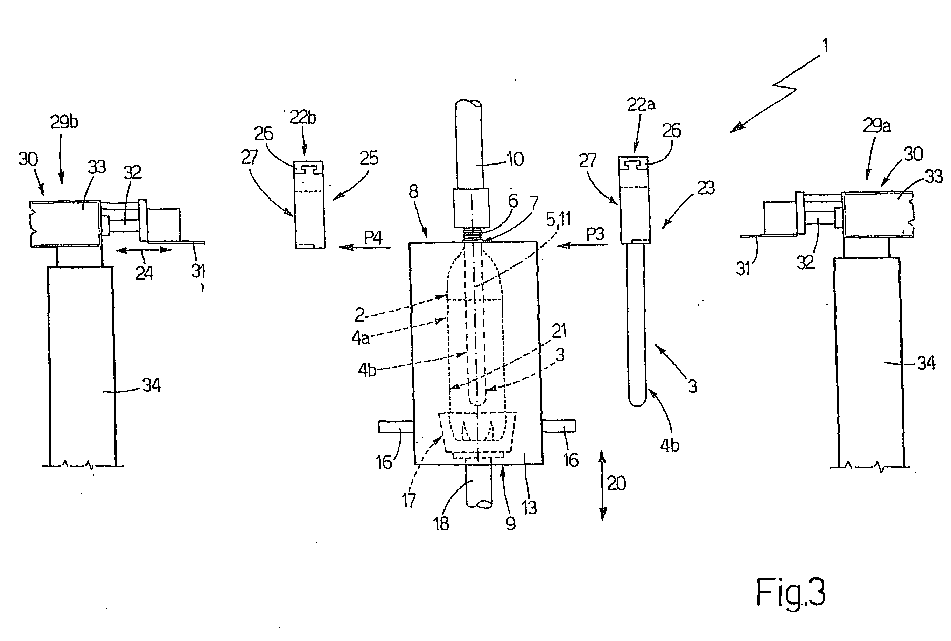

Machine 1 comprises a number of (in the example shown, four) blowing units 8, each of which comprises a mold 9 and a known blowing device 10 (Figure 3) associated with mold 9.

Molds 9 have respective substantially vertical, longitudinal axes 11, which are aligned in a substantially horizontal direction 12 crosswise to axes 11, and are substantially equally spaced in direction 12 with a spacing D1. Each mold 9 comprises two half-molds 13, each of which is substantially in the form of a rectangular parallelepiped, is defined by a flat surface 14 extending crosswise to direction 12 and facing the other half-mold 13, and has a cavity 15 opening outwards at relative surface 14.

Half-molds 13 are divided into two groups, each comprising a respective number of (in the example shown, four) half-molds 13, which alternate with the half-molds 13 in the other group, and are fitted to a single supporting frame 16.

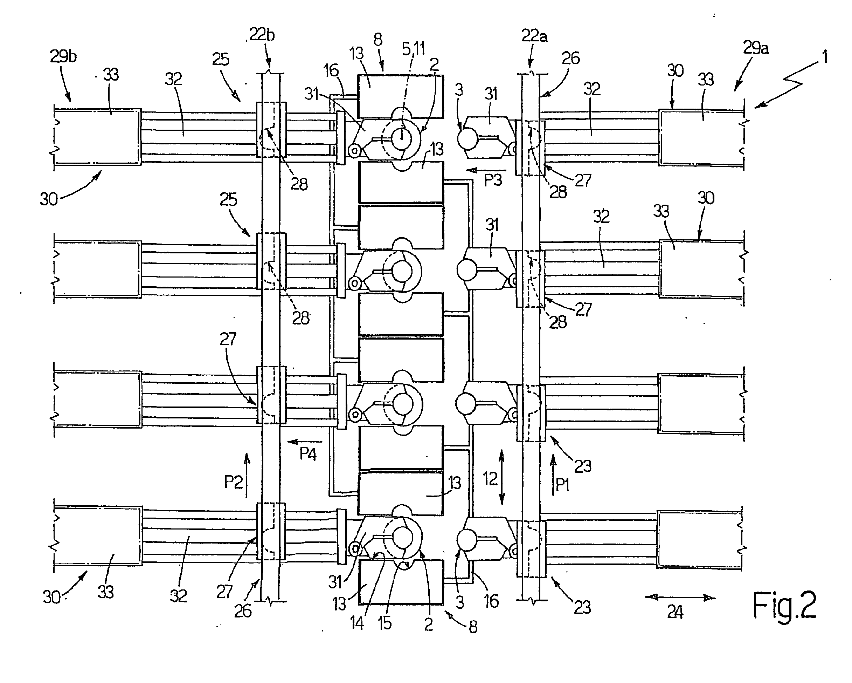

The two frames 16 are movable with respect to each other in direction 12, by a known actuating device not shown, to move each pair of half-molds 13 between a parted position (Figure 2), in which half-molds 13 are located a given distance apart, and a closed position (Figure 1), in which half-molds 13 are positioned contacting each other at relative surfaces 14.

With reference to Figure 3, each mold 9 also comprises a cup-shaped bottom 17, which is substantially coaxial with relative axis 11, is positioned with its concavity facing upwards, and is fitted to an output rod 18 of an actuating cylinder (not shown) to move, in a direction 20 parallel to axes 11, between a lowered rest position (not shown) and a raised work position (Figure 3). When bottom 17 is in the raised work position and the two half-molds 13 in the closed position, mold 9 is closed, and bottom 17 defines, together with half-molds 13, a chamber 21 of substantially the same shape and volume as bottle 2.

Each device 10 comprises a stretch rod (not shown) extending substantially coaxially with relative axis 11, and movable axially in direction 20 with respect to relative preform 3 by a known actuating device (not shown); and a circuit for feeding compressed air into relative preform 3.

Machine 1 also comprises two conveying means 22a, 22b located on opposite sides of molds 9 in direction 12, and one of which (hereinafter indicated 22a) conveys each preform 3 along a relative feed path P1 extending between a loading station (not shown) and a relative transfer station 23, where preform 3 is aligned with relative mold 9 in a direction 24 perpendicular to directions 12 and 20, and the other of which (hereinafter indicated 22b) conveys each bottle 2 along a relative feed path P2 extending between a transfer station 25, where bottle 2 is aligned with relative mold 9 in direction 24, and an unloading station (not shown).

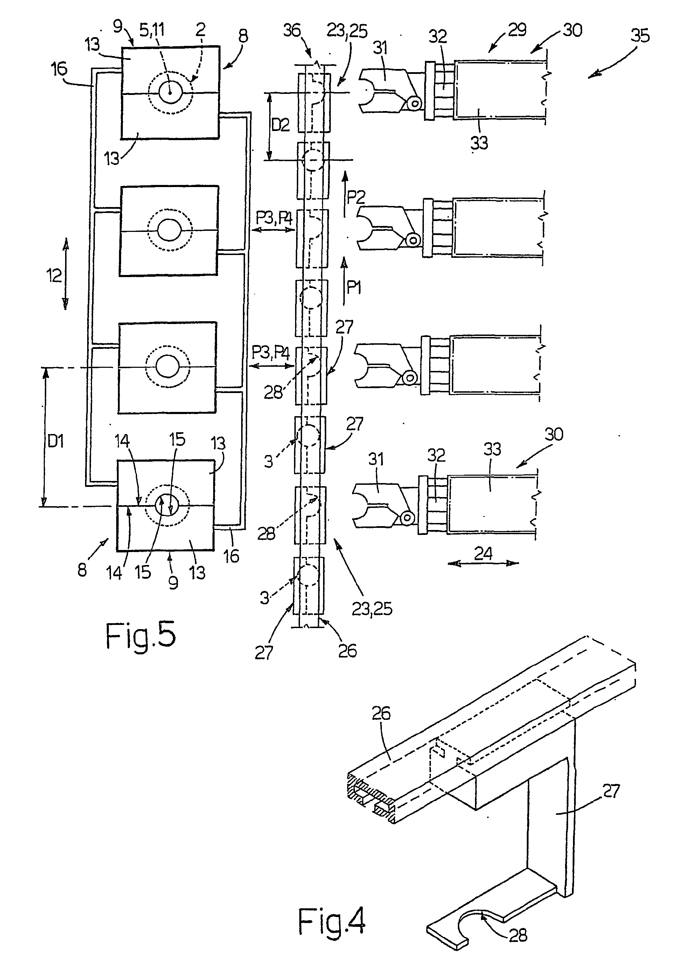

Each device 22a, 22b comprises a guide 26 extending, at least at molds 9, parallel to direction 12; and a number of conveying members defined by respective slides 27 equally spaced along relative guide 26 with a spacing substantially equal to D1, and fitted in known manner to relative guide 26 so as to move all together along relative guide 26 in steps. With reference to Figure 4, each slide 27 is substantially C-shaped, and comprises a substantially semicircular seat 28 - preferably, though not necessarily, an elastically deformable seat - for receiving a bottle 2 or a preform 3, which is retained axially inside seat 28 by relative collar 7.

For each device 22a, 22b, machine 1 comprises a transfer device 29a, 29b, in turn comprising a number of transfer members 30a, 30b, which are equal in number to molds 9, are equally spaced in direction 12 with spacing D1, and are located on the opposite side of relative guide 26 to relative molds 9. Each member 30a, 30b transfers relative preform 3 and, respectively, relative bottle 2 along a transfer path P3, P4 extending in direction 24 between relative station 23, 25 and relative mold 9, and comprises a known gripping member 31, which is elastically deformable to retain or release relative preform 3 or bottle 2, and is fitted to an output rod 32 of an actuating cylinder 33 fixed to a frame 34 of machine 1.

In connection with the above, it should be pointed out that member 31 and rod 32 extend through relative slide 27 when moved between an extracted position (shown in Figure 2 with reference to members 30b) and a withdrawn position (Figure 1), and that member 31 is separated from relative seat 28 by a distance, measured parallel to direction 20, approximately equal to but no smaller than the thickness of collar 7, also measured parallel to direction 20.

Operation of machine 1 will now be described as of the instant in which:
each mold 9 is closed and houses a preform 3;
each device 10 is in the process of blowing preform 3 inside relative mold 9;
device 22a has fed another preform 3 into each of stations 23;
the preforms 3 at stations 23 and inside seats 28 are engaged above relative collars 7 by members 30a; and
the preforms 3 in molds 9 are engaged above relative collars 7 by members 30b.

When the blowing operation is completed, the two frames 16 are moved with respect to each other in direction 12, and bottoms 17 are moved into the lowered rest position to open molds 9 (Figure 2). At this point, members 30b are moved in direction 24 to transfer bottles 2 along relative paths P4 into relative seats 28; and, at the same time, members 30a are moved in direction 24 to transfer the new preforms 3 along relative paths P3 into relative molds 9 and into a position coaxial with relative axes 11.

Finally, the two frames 16 are moved with respect to each other in direction 12, and bottoms 17 are moved into the raised work position to close molds 9; members 30a, 30b are moved into the withdrawn position; and devices 22a, 22b are operated to impart to each slide 27 a movement at least equal to spacing D1 multiplied by the number of molds 9, so that device 22a feeds four new preforms 3 along relative paths P1 into relative stations 23, and device 22b feeds the blown bottles 2 along relative paths P2, and feeds four empty seats 28 into relative stations 25.

Figure 5 shows a linear machine 35 for blowing plastic bottles 2, and which differs from machine 1 solely by comprising a single transfer device 29; and a single conveying device 36 extending, at molds 9, parallel to direction 12 and between molds 9 and device 29.

Device 36 comprises a number of slides 27, which are equally spaced along guide 26 with a spacing D2 substantially equal to half spacing D1, and are loaded with preforms 3 at said loading station (not shown), so that each preform 3 is located between two empty seats 28.

Operation of machine 35 will now be described as of the instant in which each member 31 engages a preform 3 inside relative mold 9; and each station 25, which, in machine 35, coincides with relative station 23, is occupied by an empty seat 28. When the blowing operation is completed, molds 9 are opened as described previously to enable members 31 to transfer the blown bottles 2 along relative paths P4 to relative empty seats 28; and device 36 is operated to impart to each slide 27 a movement substantially equal to spacing D2, and to feed a new preform 3 into each of stations 23, 25.

At this point, members 31 transfer the new preforms 3 along relative paths P3 - which, in machine 35 coincide with relative paths P4 - into relative molds 9 and into a position coaxial with relative axes 11.

Machines 1 and 35 therefore have the advantage of each preform 3 and relative bottle 2 being transferred between relative mold 9 and relative stations 23, 25 along respective paths P3 and P4, which extend crosswise to the direction 12 in which units 8 are aligned, and are each of constant length alongside a variation in the number of units 8.

Alongside a variation in the number of units 8, the output rate of machines 1 and 35 is therefore always substantially equal to the output rate of a machine with one unit 8 multiplied by the number of units 8.

Machine 35 also has the further advantage of one side of units 8 being substantially clear, thus enabling fast, easy access to units 8 for inspection and maintenance.

## Claims

1. A method of blowing plastic bottles (2) on a linear blowing machine comprising at least two blowing units (8) aligned in a given first direction (12), and each for blowing a respective bottle (2) from a relative preform (3), the method comprising the steps of:
feeding each said preform (3) and the relative said bottle (2) along respective feed paths (P1, P2);
transferring each said preform (3) and the relative said bottle (2) between the respective feed paths (P1, P2) and the relative said blowing unit (8) along respective transfer paths (P3, P4), each of which extends at least partly in a second direction (24) crosswise to said first direction (12);
the method being **characterized in that**
said transfer paths (P3, P4) of each said preform (3) and of the relative said bottle (2) are separate.

2. A method as claimed in Claim 1, wherein each said blowing unit (8) comprises a mold (9), in turn comprising two half-molds (13); said half-molds (13) being moved, with respect to each other in said first direction (12), to and from a position closing the mold (9).

3. A method as claimed in Claim 1 or 2, wherein a new preform (3) is loaded into the relative said blowing unit (8) at the same time as a blown bottle (2) is unloaded from the blowing unit (8).

4. A method as claimed in Claim 1 or 2, wherein a new preform (3) is loaded into the relative said blowing unit (8) after a blown bottle (2) is unloaded from the blowing unit (8).

5. A linear machine for blowing plastic bottles (2), comprising at least two blowing units (8) aligned in a given first direction (12), and each for blowing a respective bottle (2) from a relative preform (3) ; conveying means (22a, 22b) for feeding each said preform (3) and the relative said bottle (2) along respective feed paths (P1, P2) ; transfer means (29) for transferring each said preform (3) and the relative said bottle (2) between the relative said feed paths (P1, P2) and the relative said blowing unit (8) along respective transfer paths (P3, P4), each of which extends at least partly in a second direction (24) crosswise to said first direction (12); and **characterized in that** said conveying means (22a, 22b) comprise two conveying devices (22a, 22b) for conveying said preforms (3) and said bottles (2) respectively; said transfer paths (P3, P4) of each said preform (3) and of the relative said bottle (2) being separate.

6. A machine as claimed in Claim 5, wherein each said blowing unit (8) comprises a mold (9), in turn comprising two half-molds (13) movable, with respect to each other in said first direction (12), to and from a position closing the mold (9).

7. A machine as claimed in Claim 5 or 6, wherein said blowing units (8) are equally spaced in said first direction (12) with a given first spacing (D1); each said conveying device (22a, 22b) comprising a number of conveying members (27) equally spaced with said first spacing (D1) along the relative conveying device (22a, 22b) .

8. A machine as claimed in any one of Claims 5 to 7, wherein, for each said blowing unit (8), said transfer means (29) comprise one transfer member (30) for transferring a said preform (3) and the relative said bottle (2) along the relative transfer paths (P3, P4).

9. A machine as claimed in any one of Claims 5 to 8, wherein, for each said blowing unit (8), said transfer means (29) comprise two transfer members (30) for transferring a said preform (3) and the relative said bottle (2) respectively along the relative transfer paths (P3, P4).

## Patentansprüche

1. Verfahren zum Blasen von Plastilcflaschen (2) auf einer linearen Blasformmaschine, die mindestens zwei Blaseinheiten (8) umfasst, die in einer ersten gegebenen Richtung (12) ausgerichtet sind, und jede zum Blasen einer entsprechenden Flasche (2) aus einer dazugehörigen Vorform (3) dient, wobei das Verfahren folgende Schritte umfasst:
Zufuhr der Vorform (3) und der zugehörigen Flasche (2) entlang entsprechender Zuführwege (P1, P2);
Befördern der Vorform (3) und der zugehörigen Flasche (2) zwischen den Zufuhrwegen (P1, P2) und der zugehörigen Blaseinheit (8) entlang entsprechender Beförderungswege (P3, P4), wobei jeder Weg zumindest teilweise entlang einer zweiten Richtung (24) verläuft, die zur ersten Richtung (12) quer verläuft;
wobei das Verfahren **dadurch gekennzeichnet ist, dass** die Beförderungswege (P3, P4) einer jeden Vorform (3) und der zugehörigen Flasche (2) getrennt sind.

2. Verfahren gemäß Anspruch 1, wobei jede Blaseinheit (8) eine Gussform (9) umfasst, die wiederum zwei halbe Gussformen (13) enthält; wobei die halben Gussformen (13) in Bezug zueinander in die erste Richtung (12) bewegt werden, hin und weg von einer Position, in der die Gussform (9) geschlossen ist.

3. Verfahren gemäß Anspruch 1 oder 2, wobei eine neue Vorform (3) in die zugehörige Blaseinheit (8) gleichzeitig geladen wird, wenn eine geblasene Flasche (2) aus der Blaseinheit (8) entladen wird.

4. Verfahren gemäß Anspruch 1 oder 2, wobei eine neue Vorform (3) in die zugehörige Blaseinheit (8) geladen wird, nachdem eine geblasene Flasche (2) aus der Blaseinheit (8) entladen wurde.

5. Lineare Maschine zum Blasen von Plastikflaschen (2), umfassend zumindest zwei Blaseinheiten (8), die in einer gegebenen ersten Richtung (12) ausgerichtet sind, und jede zum Blasen einer entsprechenden Flasche (2) aus einer dazugehörigen Vorform (3) dient; Transportmittel (22a, 22b) für die Zufuhr jeder Vorform (3) und der zugehörigen Flasche (2) entlang entsprechender Zufuhrwege (P1, P2); Beförderungsmittel (29) zur Beförderung jeder Vorform (3) und der zugehörigen Flasche zwischen den zugehörigen Zufuhrwegen (P1, P2) und der zugehörigen Blaseinheit (8) entlang der entsprechenden Beförderungswege (P3, P4), wobei sich jeder zumindest teilweise in eine zweite Richtung (24) erstreckt, die quer zur ersten Richtung (12) verläuft; **dadurch gekennzeichnet, dass** die Transportmittel (22a, 22b) zwei Transportgeräte (22a, 22b) jeweils zum Transport der Vorformen (3) und der zugehörigen Flaschen (2) umfasst, wobei die Beförderungswege (P3, P4) einer jeden Vorform (3) und der dazugehörigen Flasche (2) getrennt sind.

6. Maschine gemäß Anspruch 5, wobei jede Blaseinheit (8) eine Gussform (9) umfasst, die wiederum zwei halbe Gussformen (13) einschließt; die in Bezug zueinander in die erste Richtung (12) bewegbar sind, hin und weg von einer Position, in der die Gussform (9) geschlossen ist.

7. Eine Maschine gemäß Anspruch 5 oder 6, wobei die Blaseinheiten (8) in der ersten Richtung (12) durch einen gegebenen ersten Abstand (D1) gleichmäßig beabstandet sind; wobei jedes Transportgerät (22a, 22b) mehrere Transportelemente (27) umfasst, die gleichmäßig durch den ersten Abstand (D1) entlang des zugehörigen Transportgeräts (22a, 22b) beabstandet sind.

8. Maschine gemäß einem der Ansprüche 5 bis 7, wobei für jede Blaseinheit (8) die Beförderungsmittel (29) ein Beförderungselement (30) zur Beförderung der Vorform (3) und der zugehörigen Flasche (2) entlang zugehöriger Beförderungswegen (P3, P4) umfassen.

9. Maschine gemäß einem der Ansprüche 5 bis 8, wobei für jede Blaseinheit (8) die Beförderungsmittel (29) zwei Beförderungselemente (30) zur Beförderung der Vorform (3) und der zugehörigen Flasche (2) entlang den zugehörigen Beförderungswegen (P3, P4) umfassen.

## Revendications

1. Un procédé de soufflage de bouteilles (2) en matière plastique sur une machine de soufflage linéaire comprenant au moins deux unités de soufflage (8) alignées dans une première direction (12) donnée, et chacune pour souffler une bouteille (2) respective à partir d'une préforme (3) en cause, le procédé comprenant les étapes consistant à:
- alimenter, chaque dite préforme (3) et ladite bouteille (2) en cause, le long de trajets d'alimentation (P1, P2) respectifs;
- transférer chaque dite préforme (3) et ladite bouteille (2) en cause entre les chemins d'alimentation (P1, P2) respectifs et ladite unité de soufflage (8) en cause le long de chemins de transfert (P3, P4) respectifs, dont chacun s'étend au moins partiellement dans une deuxième direction (24), transversalement par rapport à ladite première direction (12);
le procédé étant **caractérisé en ce que**
- lesdits chemins de transfert (P3, P4), de chaque dite préforme (3) et de ladite bouteille (3) en cause, sont séparés.

2. Un procédé tel que revendiqué à la revendication 1, dans lequel chaque dite unité de soufflage (8) comprend un moule (9), comprenant à son tour deux demi-moules (13); lesdits demi-moules (13) étant déplacés, l'un par rapport à l'autre dans ladite première direction (12), vers et depuis une position de fermeture de moule (9).

3. Un procédé tel que revendiqué à la revendication 1 ou 2, dans lequel une nouvelle préforme (3) est chargée dans ladite unité de soufflage (8) en cause, en même temps qu'une bouteille (2) soufflée est déchargée de ladite unité de soufflage (8).

4. Un procédé tel que revendiqué à la revendication 1 ou 2, dans lequel une nouvelle préforme (3) est chargée dans ladite unité de soufflage (8) en cause après qu'une bouteille (2) soufflée ait été déchargée de l'unité de soufflage (8).

5. Une machine linéaire pour souffler des bouteilles (2) en matière plastique, comprenant au moins deux unités de soufflage (8) alignées dans une première direction (12) donnée, et chacune pour souffler une bouteille (2) respective depuis une préforme (3) en cause ; des moyens de transport (22a, 22b), pour amener chaque dite préforme (3) et ladite bouteille (2) en cause le long de chemins d'alimentation (P1, P2) respectifs; des moyens de transfert (29) pour transférer chaque dite préforme (3) et ladite bouteille (2) en cause entre lesdits chemins d'alimentation (P1, P2) en cause et ladite unité de soufflage (8) en cause, le long de chemins de transfert (P3, P4) respectifs, dont chacun s'étend au moins en partie dans une deuxième direction (24), transversalement par rapport à la dite première direction (12); et **caractérisée en ce que** lesdits moyens de transport (22a, 22b) comprennent deux dispositifs de transport (22a, 22b) pour transporter lesdites préformes (3) et lesdites bouteilles (2) respectivement; lesdits chemins de transfert (P3, P4) de chaque dite préforme (3) et de ladite bouteille (2) en cause étant séparés.

6. Une machine telle que revendiquée à la revendication 5, dans laquelle chaque dite unité de soufflage (8) comprend un moule (9), comprenant à son tour deux demi-moules (13) déplaçables, l'un par rapport à l'autre, dans ladite première direction (12), vers et depuis une position de fermeture de moule (9).

7. Une machine telle que revendiquée à la revendication 5 ou 6, dans laquelle lesdites unités de soufflage (8) sont espacées également dans ladite première direction (12) avec un premier espacement (D1) donné; chaque dit dispositif de transport (22a, 22b) comprenant une pluralité d'organes de transport (27), également espacés avec ledit premier espacement (D1) le long dudit dispositif de transport (22a, 22b) en cause.

8. Une machine telle que revendiquée à l'une quelconque des revendications 5 à 7, dans laquelle, pour chaque dite unité de soufflage (8), lesdits moyens de transport (29) comprennent un organe de transfert (30) pour transférer une dite préforme (3) et ladite bouteille (2) en cause le long des chemins de transfert (P3, P4) en cause.

9. Une machine telle que revendiquée à l'une quelconque des revendications 5 à 8, dans laquelle, pour chaque dite unité de soufflage (8), lesdits moyens de transport (29) comprennent deux organes de transfert (30) pour transférer une dite préforme (3) et ladite bouteille (2) en cause, respectivement, le long des chemins de transfert (P3, P4) relatifs.
